# EUROPEAN PATENT SPECIFICATION

(11) **EP 2 293 147 B1**
(45) Date of publication and mention of the grant of the patent: **24.08.2016**
(21) Application number: 10157329.3
(22) Date of filing: 23.03.2010
(51) Int. Cl.: G03G 15/00

(54) **Image Forming Apparatus And Method Of Controlling Low Power Thereof**
Bilderzeugungsvorrichtung und Verfahren zur Steuerung des Schwachstroms dafür
Appareil de formation d'images et procédé de commande de sa faible puissance

(30) Priority: 24.07.2009 KR 20090067626
(43) Date of publication of application: 09.03.2011
(73) Proprietor: Samsung Electronics Co., Ltd., Suwon-si, Gyeonggi-do, 443-742 (KR)
(72) Inventor: Jung, Ji-won, Suwon-si Gyeonggi-do (KR)
(74) Representative: Appleyard Lees IP LLP

(56) References cited:
- EP-A1- 1 783 887
- GB-A- 2 282 991
- US-A- 5 752 049
- US-A- 5 834 857
- US-A1- 2008 259 378
- US-A1- 2009 144 573

## Description

### BACKGROUND

### 1. Field

Aspects of the present embodiments relate to an image forming apparatus and a method of controlling low power thereof, and more particularly, to an image forming apparatus which can minimize power consumption in a standby mode and a method of controlling low power thereof.

### 2. Description of the Related Art

An operating mode relating to power consumption of an image forming apparatus is divided into an active mode to perform printing, scanning, or copying and a standby mode in which the aforementioned operations are not performed and the apparatus waits for a command. In the active mode, the image forming apparatus performs a normal function as its power switch is turned on, and, in the standby mode, the power switch of the image forming apparatus is turned off, but a main power source is still supplied with power.

The electronic goods including the image forming apparatus spend most of the time in the standby mode rather than in the active mode. Therefore, the energy saving depends on the reduction in energy consumption in the standby mode.

However, even after a related-art image forming apparatus enters a standby mode, the image forming apparatus cannot completely turn off the power of peripherals including a main controller when a wakeup request is input. Therefore, standby power cannot be minimized in the standby mode.

GB-A-2,282,991 mentions an energy-saving image forming apparatus such as a laser printer, with a primary energy saving mode activated after a time where power to a heat lamp and ventilating fan is turned off and a secondary energy saving mode in response to user inputs where power for an image processor is turned off. A reactivation key by the user initiates a warm-up operation to bring the apparatus back to a print ready state, and the claims have been characterised based on this document.

### SUMMARY

According to the present invention there is provided an image forming apparatus and a method for controlling power in an image forming apparatus as set forth in the appended claims. Other features of the invention will be apparent from the dependent claims, and the description which follows.

Aspects of the present embodiments aim to provide an image forming apparatus which can minimize power consumption in a standby mode and a method of controlling low power thereof.

Additional aspects and/or advantages of the invention will be set forth in part in the description which follows and, in part, will be apparent from the description, or may be learned by practice of the invention.

In one aspect there is provided an image forming apparatus to control low power, including: a plurality of operation units; a main controller to control the plurality of operation units in an active mode in which power is supplied; a main power supply unit to supply the power to the main controller and the operation units in the active mode; at least one communication interface receiving data; and a sub-controller interrupting power supplied to the main controller and the operation units from the main power supply unit so that the main controller enters a standby mode, and analyzing data received by the at least one communication interface and determining whether to convert the standby mode into the active mode.

The sub-controller may include: a first media access controller (MAC) receiving data input through the at least one communication interface; a processor analyzing data received through the first MAC and controlling the main power supply unit to supply the power to the main controller when it is determined to convert the standby mode into the active mode; and a second MAC relaying the data which is received by the first MAC to the main controller when the standby mode is converted into the active mode.

The sub-controller may further include a switch to control a transmitting time of the data when the second MAC transmits the data in the format of media independent interface (MII), gigabit MII (GMI), and reduced GMII (RGMII).

The sub-controller may include: a universal serial bus (USB) device receiving data through the at least one communication interface; and a USB host relaying the data received by the USB device to the main controller when the standby mode is converted into the active mode, a processor analyzing the data received through the USB device to determine whether to convert the standby mode into the active mode.

The sub-controller may include: a media access controller (MAC) receiving data through one of the at least one communication interface; a processor analyzing the received data and controlling the main power supply unit to supply the power to the main controller when it is necessary to convert the standby mode into the active mode; and a universal serial bus (USB) host relaying the data received through the MAC to the main controller when the standby mode is converted into the active mode.

The sub-controller may further include a USB device receiving data through another of the at least one communication interface, the processor analyzing the data received by the USB device to determine whether to convert the standby mode into the active mode, the USB host relaying the data received through the USB device to the main controller when the standby mode is converted into the active mode.

The sub-controller may include: a universal serial bus (USB) device receiving data through one of the at least one communication interface; a processor analyzing the received data, determining whether to convert the standby mode into the active mode, and controlling the main power supply unit to supply the power to the main controller when it is determined to convert the standby mode into the active mode; and a data output media access controller (MAC) relaying the data received through the USB device to the main controller when the standby mode is converted into the active mode.

The sub-controller may further include a data input MAC receiving data through another of the at least one communication interface, the processor analyzing the data received through the data input MAC to determine whether to convert the standby mode into the active mode, the data output MAC relaying the data received through the data input MAC to the main controller when the standby mode is converted into the active mode.

The main controller may convert a mode of a memory communicating with the main controller into a self-refresh mode, and the sub-controller may interrupt power supplied to the main controller and the operation units from the main power supply unit and maintain power supplied to the sub-controller when the mode of the memory is converted into the self-refresh mode.

The image forming apparatus may further include a low power supply unit supplying power to the sub-controller.

The at least one communication interface may be at least one of a network interface and a universal serial bus (USB) interface.

The sub-controller may be connected to a fax transceiver to transceive data with an external facsimile machine or a wakeup button to request conversion from the standby mode to the active mode, and may analyze data input from the fax transceiver or the wakeup button to determine whether to convert the standby mode into the active mode.

The sub-controller may convert the standby mode into the active mode and the fax transceiver may relay fax data received from the external facsimile machine to the main controller when a ring signal is detected from the fax transceiver.

Each of the plurality of operation units may include an image forming mechanism to output the fax data on paper.

In one aspect, the main memory comprises a DDR (double data rate) memory.

In one aspect, the image forming apparatus further comprises a low power supply unit supplying power to the sub-controller.

In one aspect, the communication interface comprises a network interface and a PHY chip coupled between the network interface and the sub-controller.

In one aspect, the image forming apparatus may further comprise: a fax transceiver to transceive data with an external facsimile machine; and a wakeup button to request conversion into the active mode, wherein data input via the fax transceiver or the wakeup button is analyzed to determine whether to convert into the active mode.

In one aspect, the main controller is converted into the active mode and the fax transceiver transmits fax data received from the external facsimile machine to the main controller when a ring signal is detected from the fax transceiver.

In one aspect, the received data to be processed by the main controller comprises printing data.

In one aspect, during the standby mode, if it is determined that the received data is processable by the sub-controller, the received data is processed by the sub-controller without waking up the main controller from the standby mode.

In one aspect, during the active mode, the sub-controller relays data received via the communication interface to the main controller.

In one aspect there is provided a method of controlling low power by an image forming apparatus which includes a main power supply unit, a main controller, a sub-controller, and a plurality of operation units, the method including: supplying power to the main controller that controls the operation units and the operation units in an active mode, from the main power supply unit; entering a standby mode by interrupting power supplied to the main controller and the operation units from the main power supply unit, by the sub-controller; and determining whether to convert the standby mode into the active mode by analyzing data received through at least one communication interface connected to the sub-controller.

The data received through the at least one communication interface may be received by a first media access controller (MAC), and the method may further include supplying the power to the main controller and converting the standby mode into the active mode when it is determined to convert the standby mode into the active mode as a result of analyzing the data received through the first MAC; and relaying the data received through the first MAC to the main controller through a second MAC.

The relaying may further include relaying the data by controlling a transmitting time of the data using a switch when the second MAC transmits the data in the format of media independent interface (Mll), gigabit MII (GMI), and reduced GMII (RGMII).

The determining may include receiving the data input from one of the at least one communication interface, by a universal serial bus (USB) device, and the method may further include relaying the data received through the USB device to the main controller, by a USB host when the standby mode is converted into the active mode.

The determining may include receiving the data input from one of the at least one communication interface, by a media access controller (MAC), and the method may further include: supplying the power to the main controller and converting the standby mode into the active mode when a determination is made to convert the standby mode into the active mode as a result of analyzing the data received through the MAC; and relaying the data received through the MAC to the main controller by a universal serial bus (USB) host.

The determining may include receiving the data input from another of the at least one communication interface, by a USB device, and the USB host may relay the data received through the USB device to the main controller when the standby mode is converted into the active mode.

The determining may include receiving the data input from one of the at least one communication interface, by a universal serial bus (USB) device, and the method may further include: supplying the power to the main controller by the main power supply unit and converting the standby mode into the active mode when a determination is made to convert the standby mode into the active mode as a result of analyzing the data received through the USB device; and relaying the data received through the USB device to the main controller through a data output media access controller.

The determining may include receiving the data input through another of the at least one communication interface, by a data input media access controller (MAC), and the data output MAC may relay the data received by the data input MAC to the main controller when the standby mode is converted into the active mode.

The entering the standby mode may include: changing a mode of a memory communicating with the main controller to a self-refresh mode; interrupting power supplied to the main controller and the operation units from the main power supply unit under control of the sub-controller; and maintaining power supplied to the sub-controller.

The at least one communication interface may be at least one of a network interface and a universal serial bus (USB) interface.

The sub-controller may be further connected to a fax transceiver to transceive data with an external facsimile machine or a wakeup button to request conversion from the standby mode to the active mode, and may analyze data input from the fax transceiver or the wakeup button to determine whether to convert the standby mode into the active mode.

According to the present embodiments, in the standby mode, the power supplied to the main controller is completely interrupted and the power supplied to the sub-controller is maintained so that minimum power lower than 1W can be consumed.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a block diagram illustrating an image forming apparatus to control low power according to at least one embodiment;
FIG. 2 is a flowchart illustrating a method of controlling low power of the image forming apparatus of FIG. 1;
FIGS. 3 to 6 are block diagrams each illustrating an image forming apparatus to control low power according to at least one embodiment;
FIG 7 is a flowchart illustrating a process of converting an active mode into a standby mode in a method of controlling low power of the image forming apparatus of FIG. 3;
FIG. 8 is a flowchart illustrating a process of converting a standby mode into an active mode in the method of controlling low power of the image forming apparatus of FIG. 3; and
FIG. 9 is a block diagram illustrating an image forming apparatus to control low power according to at least one embodiment.

### DETAILED DESCRIPTION

Reference will now be made in detail to the present embodiments, examples of which are illustrated in the accompanying drawings, wherein like reference numerals refer to the like elements throughout. The embodiments are described below in order to explain the present invention by referring to the figures.

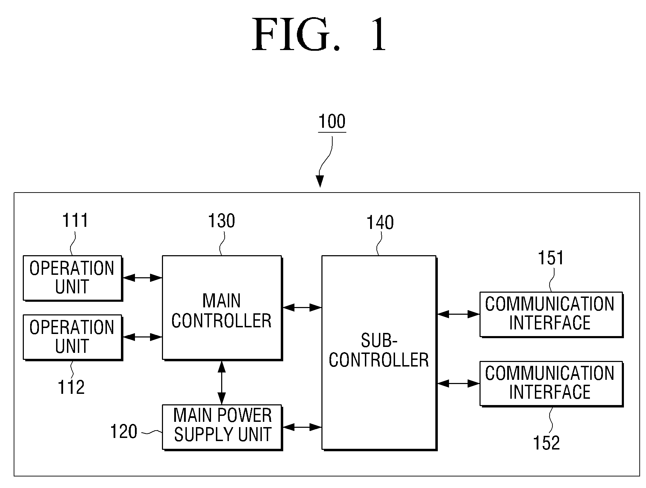

FIG. 1 is a block diagram illustrating an image forming apparatus 100 to control low power according to an exemplary embodiment. Referring to FIG. 1, the image forming apparatus 100 includes a plurality of operation units 111, 112, a main power supply unit 120, a main controller 130, a sub-controller 140, and a plurality of communication interfaces 151, 152. The image forming apparatus 100 is operated by power supplied from the main power supply unit 120 and can minimize power consumption in a standby mode of power saving by interrupting power supplied to the operation units 111, 112 and completely turning off the main power supply unit 120.

An active mode refers to a mode in which the image forming apparatus 100 is performing its particular function or is currently able to perform its particular function when a request to do so is input, and a standby mode refers to a mode in which the image forming apparatus 100 is not performing its particular function and is waiting for a request. In this embodiment, the image forming apparatus 100 consumes only low power, which is less than 1W in the standby mode, for example.

The image forming apparatus 100 refers to an apparatus that performs generating, printing, receiving, and transmitting image data and may include a printer, a scanner, a photocopier, a facsimile machine and a multifunction peripheral, for example. The method for low power consumption provided by the image forming apparatus 100 can be applied to all electronic goods, including a television, a computer, and a laptop computer, for example.

The plurality of operation units 111, 112 may be one of a printing unit, a copying unit, a scanning unit, an auto document feeder (ADF) unit, a finisher unit, a high capacity feeder (HCF) unit, and a double capacity feeder (DCF) unit, for example.

The main power supply unit 120 supplies power to the plurality of operation units 111, 112, the main controller 130, the sub-controller 140 and the plurality of communication interface units 151, 152 when the image forming apparatus 100 is in the active mode, and interrupts the power supplied to the plurality of operation units 111, 112 and the main controller 130 in the standby mode.

In the active mode in which power is supplied, the main controller 130 controls the plurality of operation units 111, 112 to perform their respective functions, and processes data which is relayed through the plurality of communication interfaces 151, 152 and the sub-controller 140 according to the characteristics of the data. For example, if the data input through the communication interface 151 and the sub-controller 140 is data to be printed, the main controller 130 transmits the data to a printing operation unit to print the data.

The sub-controller 140 interrupts the power supplied to the main controller 130 and the plurality of operation units 111, 112 from the main power supply unit 120 to allow the main controller 130 to enter the standby mode, and analyzes the data which is received through at least one communication interface 151, 152 to determine whether to convert the standby mode into the active mode.

For example, if the plurality of operation units 111, 112 is in an idle state for a predetermined time, the main controller 130 determines that the image forming apparatus 100 should enter the standby mode and notifies the sub-controller 140 of such. The sub-controller 140 performs the above operation according to the notification from the main controller 130. Also, if the data received through the communication interfaces 151, 152 should be processed under the control of the main controller 130, the sub-controller 140 converts the standby mode into the active mode and controls the main power supply unit 120 to supply power to the main controller 130 and the plurality of operation units 111, 112.

Since the plurality of communication interfaces 151, 152 is communicably connected to the sub-controller 140, the data is not directly input to the main controller 130 from an external source, but is input to the main controller 130 via the sub-controller 140. This is to convert the standby mode and the active mode more effectively and thus minimize power consumption.

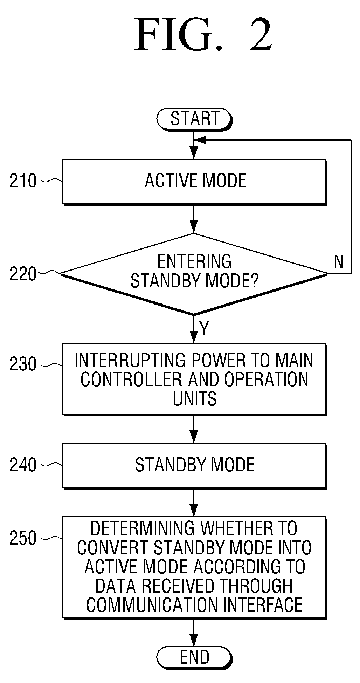

FIG. 2 is a flowchart illustrating a method of controlling low power of the image forming apparatus of FIG. 1.

Referring to FIG. 2, in the active mode in which the image forming apparatus 100 is normally operated (210), if it is determined that it is necessary to enter the standby mode (220), the main controller 130 notifies the sub-controller 140 of this necessity.

According to the notification from the main controller 130, the sub-controller 140 controls the main power supply unit 120 to interrupt the power supplied to the main controller 130 and the plurality of operation units 111, 112 (230).

Accordingly, the mode of the image forming apparatus 100 converts into the standby mode (240).

After that, the sub-controller 140 determines whether to convert the standby mode into the active mode according to the data received through one of the plurality of communication interfaces 151, 152 (250).

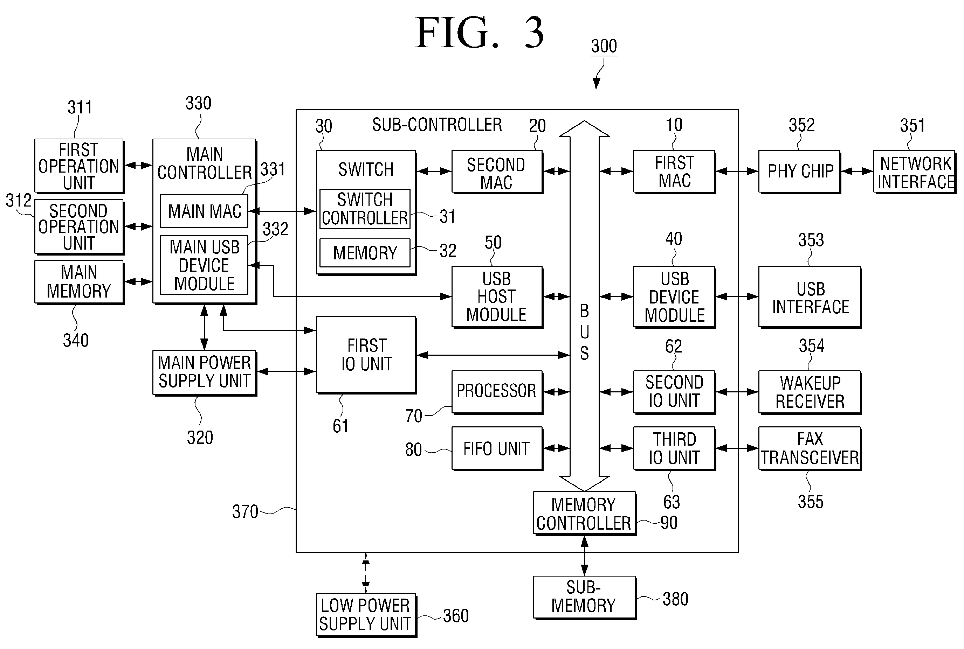

FIG. 3 is a block diagram illustrating an image forming apparatus of controlling low power according to another exemplary embodiment.

Referring to FIG. 3, an image forming apparatus 300 includes a first operation unit 311 and a second operation unit 312, a main power supply unit 320, a main controller 330, a main memory 340, a network interface 351, a PHY (physical layer) chip 352, a universal serial bus (USB) interface 353, a wakeup receiver 354, a fax transceiver 355, a low power supply unit 360, a sub-controller 370, and a sub-memory 380. The respective components of FIG. 3 are communicably connected to one another via a BUS, and the main power supply unit 320 may be connected to the components to supply power to them, but the connection is not illustrated.

Since the first and the second operations units 311, 312, the main power supply unit 320, the main controller 330, and the sub-controller 370 are almost the same as the plurality of operation units 111, 112, the main power supply unit 120, the main controller 130 and the sub-controller 140 of FIG. 1, the detailed description thereof is omitted.

Two or more of the first and the second operations units 311, 312 may be provided but only the two operation units are illustrated for the sake of simplicity.

In an active mode, the main power supply unit 320 supplies power to the respective components of the image forming apparatus 300. In a standby mode, if the low power supply unit 360, which supplies power to the sub-controller 370, is not separately provided, the main power supply unit 320 interrupts the power supplied to the first and the second operation units 311, 312, the main controller 330, and the main memory 340, but maintains the power supplied to the network interface 351, the PHY chip 352, the USB interface 353, the wakeup receiver 354, the fax transceiver 355, the sub-controller 370, and the sub-memory 380. The main power supply unit 320 supplies power through a first input and output (IO) unit 61.

Also, in the standby mode, if the low power supply unit 360 is provided, the main power supply unit 320 interrupts the power supplied to the first and the second operation units 311, 312, the main controller 330, the main memory 340, the network interface 351, the PHY chip 352, the USB interface 353, the wakeup receiver 354, the fax transceiver 355, the sub-controller 370, and the sub-memory 380. At this time, the low power supply unit 360 supplies the power to the sub-controller 370 and the sub-memory 380.

Hereinafter, the image forming apparatus in the active mode prior to entering the standby mode will be described.

In the active mode in which power is supplied, the main controller 330 controls the first and the second operation units 311, 312 and maintains the active mode. If the image forming apparatus 300 is not operated for a predetermined time, the main controller 330 determines that the image forming apparatus enters the standby mode and notifies the sub-controller 370 of such.

The main controller 330 includes a main media access controller (MAC) 331 and a main USB device module 332. The main MAC 331 data-communicates with a first MAC 10 and a second MAC 20 through a switch 30 of the sub-controller 370. The main USB device module 332 data-communicates with a USB host module 50 of the sub-controller 370.

When the image forming apparatus 300 is powered-on and booted, the main memory 340 loads and stores the programs necessary to drive the image forming apparatus 300 and the status information of the image forming apparatus 300 from a read-only memory (ROM) (not shown). The main memory 340 may be a random access memory (RAM), for example, a DDR (double data rate) memory, but not limited thereto.

The network interface 351 serves as a communication interface and provides a network connector to communicate with an external network. For example, a network interface card is connected to the network interface 351 so that data transmission and reception over a network is possible and an Internet function can be provided.

The PHY chip 352 outputs the data which is received from the network through the network interface 351 to the first MAC 10 using a protocol corresponding to a physical layer of an open system interconnection (OSI) model.

The USB interface 353 is a connector to which a USB device or a USB cable is connected. For example, various devices, such as a USB memory, a personal computer, and a laptop computer may be connected to the USB interface 353. Data provided from an external source through the USB interface 353 is output to a USB device module 40.

The wakeup receiver 354 serves as a user interface through which a user requests the image forming apparatus to enter the active mode when the image forming apparatus 300 is in the standby mode, and outputs a requested signal to the sub-controller 370 through a second IO unit 62. The wakeup receiver 354 may be realized as a physical button provided on the image forming apparatus 300 or a sensor receiving a signal input from a remote controller (not shown), for example, but is not limited thereto.

The fax transceiver 354 is a circuit which performs fax transceiving and notifies the sub-controller 370 through a third IO unit 63 of ring signal reception when a ring signal has been received from an external facsimile machine (not shown).

The low power supply unit 360 may be optionally provided. The low power supply unit 360 may not provided if the main power supply unit 320 supplies power to the sub-controller 370, the sub-memory 380 and the components 351-355 in the standby mode. However, if the main power supply unit 320 does not supply power to the sub-controller 370 in the standby mode, the low power supply unit 360 is provided to supply power to the sub-controller 370, the sub-memory 380, and the components 351-355. Hereinafter, the case in which the low power supply unit 360 is not provided will be described.

If a request to convert the active mode into the standby mode is input from the main controller 330, the sub-controller 370 interrupts the power supplied to the main controller 330 and the first and the second operation units 311, 312 from the main power supply unit 320 to allow the main controller 330 to enter the standby mode. Also, the sub-controller 370 analyzes the data received from an external source through the network interface 351, the USB interface 353, the wakeup receiver 354, or the fax transceiver 355, which are communicably connected to the sub controller 370, to determine whether to convert the standby mode into the active mode.

To accomplish this, the sub-controller 370 includes the first MAC 10, the second MAC 20, the switch 30, the USB device module 40, the USB host module 50, the first through the third IO units 61, 62, 63, a processor 70, a first in first output (FIFO) unit 80, and a memory controller 90.

The first MAC 10 receives the data from the network interface 351 via the PHY chip 352, and performs a general Ethernet MAC function. The first MAC 10 and the PHY chip 352 may be connected to each other through a media independent interface (MII) for 100Mbps transmission, a gigabit MII (GMII) for 1Gbps transmission or a reduced GMII (RGMII), for example. Therefore, the first MAC 10 supports the MII, GMII or RGMII transmission.

The first MAC 10 supports a direct memory access (DMA) function and accordingly outputs the data received through the MII, GMII or RGMII to the FIFO unit 80 or the sub-memory 380 under the control of the sub-controller 370. Hereinafter, the case in which the data is output to the sub-memory 380 and is temporarily stored in the sub-memory 380 will be described for example.

The second MAC 20 reads out the data which is output from the first MAC 10 and stored in the sub-memory 380 and transmits the data to the switch 30. Reading out the data from the sub-memory 380 may be performed by the DMA function supported by the second MAC 20. Hereinafter, the function of relaying the data input through the network interface 351, the USB interface 353, the wakeup receiver 354 and the fax transceiver 355 to the main controller 330 is referred to as "relay".

The switch 30 relays the data of MII, GMII or RGMII format input from the second MAC 20 to the main MAC 331 of the main controller 330 and simultaneously controls a transmitting time of the data. To accomplish this, the switch 30 includes a switch controller 31 and a memory 32. The switch controller 31 stores the data of the MII, GMII, or RGMII format to the memory 32 and controls the transmitting time to promptly transmit the data to the main controller 330 from the memory 32.

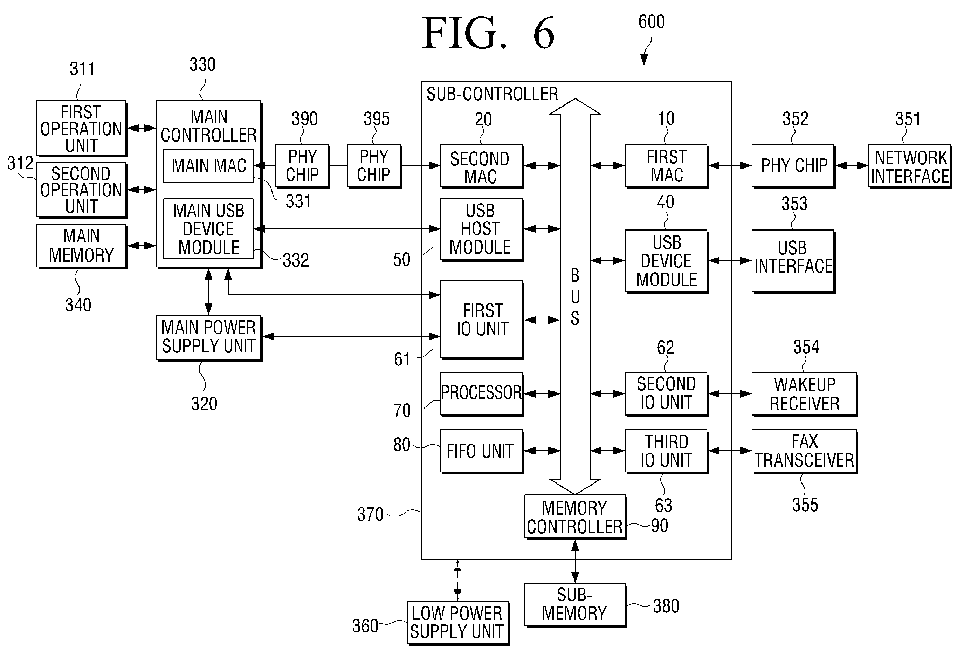

In practice, as shown in FIG. 6, at least two PHY chips are required to transmit the data of the MII, GMII or RGMII format from the main controller 330 to the sub-controller 370, and the switch 30 performs the function provided by the at least two PHY chips. Therefore, increase in the manufacturing cost and power consumption by the addition of the at least two PHY chips can be prevented.

The USB device module 40 receives the data that the USB interface 353 has received from an external source. To accomplish this, the USB device module 40 may include a USB PHY chip (not shown), a USB device (not shown), and a DMA (not shown), and as the respective functions thereof are well known in the related art, the detailed description is thus omitted. However, the data received by the USB interface 353 is received through the USB PHY chip (not shown) and is temporarily stored in the sub-memory 380 through the USB device (not shown) and the DMA (not shown).

The USB host module 50 relays the data which has been received by the USB device module 40 to the main USB device module 332. To accomplish this, the USB host module 50 may include a DMA (not shown), a USB host (not shown), and a USB PHY chip (not shown), and as the respective functions thereof are well known in the related art, the detailed description is thus omitted. However, the data temporarily stored in the sub-memory 380 is read out by the DMA (not shown) and is relayed to the main controller 330 through the USB host (not shown) and the USB PHY chip (not shown).

The first through the third IO units 61, 62, 63 serve as an input and output interface, an input and output pin or a cable connector and receive power, signals, and data. The first IO unit 61 is connected to the main power supply unit 320 to receive power and is also connected to the main controller 330 to receive various signals or data. The second IO unit 62 is connected to the wakeup receiver 354 to receive a signal requesting conversion from the standby mode into the active mode. The third IO unit 63 is connected to the fax transceiver 355 to receive a ring signal and receive fax data from an external facsimile machine.

In the active mode, the processor 70 analyzes the data which is input from the first MAC 10, the USB device module 40, and the second and the third IO units 62, 63, and relays data to the main controller 330 if the data should be processed under the control of the main controller 330, and processes data by itself if the data can be processed by the sub-controller 370. The processor 70 may be realized as an advanced RISC machine (ARM) core, for example.

Also, the processor 70 outputs an interruption control signal to the main power supply unit 320 if a signal requesting conversion from the active mode into the standby mode is received from the main controller 330 through the first IO unit 61 or another IO unit (not shown). The interruption control signal interrupts the power supplied from the main power supply unit 320 to the main controller 330 and the first and the second operation units 311, 312. Accordingly, the main power supply unit 320 supplies minimum power to the sub-controller 370 and the components 351∼355, 360, 380 connected to the sub-controller 370 and does not supply power to the main controller 330 and the components 311, 312, 340 connected to the main controller 330. To this end, the image forming apparatus 300 enters the standby mode from the active mode.

Meanwhile, the main controller 330 may change the mode of the main memory 340 communicating with the main controller 330 to a self-refresh mode and transmit a signal indicating that the mode has changed to the sub-controller 370 through the first IO unit 61, thereby requesting conversion from the active mode into the standby mode. If the signal is received, the processor 70 outputs the interruption control signal to the low power supply unit 360 to enter the standby mode. The self-refresh mode internally generates a refresh request signal and controls signals without receiving a control signal from an external source for the purpose of low power consumption, and executes a refresh operation by an internally generated address.

The FIFO unit 80 or the sub-memory 380 temporarily stores the data which is received through the network interface 351, the USB interface 353, the wake up receiver 354 or the fax transceiver 355.

If the data which is received through the components 351, 353∼355 is set to be temporarily stored in the sub-memory 380, the memory controller 90 stores the data to the sub-memory 380, and reads out the data from the sub-memory 380 when the data is relayed and outputs the data to the second MAC 20 or the USB host module 50.

Also, when the image forming apparatus 300 is powered on and booted, the memory controller 90 loads the status information of the image forming apparatus 300 stored in the ROM (not shown), a system program necessary to drive the image forming apparatus 300 in the standby mode, and the wakeup condition, and stores them to the sub-memory 380. The status information of the image forming apparatus 300 may indicate a remaining toner and progress of a job, for example. The sub-controller 370 or the processor 70 partially controls the operation of the image forming apparatus 300 in the active mode and the standby mode using the stored system program.

Hereinafter, a process of converting the standby mode into the active mode will be described.

If the image forming apparatus 300 enters the standby mode, the sub-controller 370 maintains the driving condition with minimum power supplied from the main power supply unit 320 or the low power supply unit 360. If data is received through the components 351, 353∼355 in the standby mode, the processor 70 analyzes the received data to determine whether the data satisfies the wakeup condition or can be processed by itself. If the data received through the components 351, 353∼355 in the standby mode is determined to be processed by the main controller 330, the data satisfies the wakeup condition. The wakeup condition is satisfied if the received data is a fax ring signal, a selection signal of the wakeup receiver 354, a printing request signal, a cover open detection signal, a tray open detection signal, or an input signal, such as a mouse click signal.

If the received data satisfies the wakeup condition, the processor 70 determines that it is necessary to convert the standby mode into the active mode and controls the first IO unit 61 to output a supply control signal to the main power supply unit 320. The supply control signal refers to a signal that allows the main power supply unit 320 to supply power to the first and the second operation units 311, 312, the main controller 330, and the main memory 340. To this end, the image forming apparatus 300 converts the standby mode into the active mode.

The case in which the data received through the network interface 351 (hereinafter, referred to as "network data") is relayed in the standby mode will be explained. The network data is input to the first MAC 10 through the network interface 351 and the PHY chip 352.

The processor 70 stores the network data input to the first MAC 10 to the FIFO unit 80 or the sub-memory 380, and analyzes the network data to determine whether the network data satisfies the wakeup condition or not. That is, the processor 70 determines whether it is necessary to convert the standby mode into the active mode. If it is determined that it is necessary to convert the standby mode into the active mode, the processor 70 controls the main power supply unit 320 to supply power to the image forming apparatus 300.

If the standby mode is converted into the active mode, the second MAC 20 reads out the network data from the FIFO unit 80 or the sub-memory 380 and provides the data to the switch 30. The switch 30 transmits the network data to the main MAC 331 of the main controller 330 while synchronizing the network data. The data transmitting path from the main MAC 331 to the network interface 351 is the reverse of the above-described process.

The case in which the data received through the USB interface 353 (hereinafter, referred to as "USB data") is relayed in the standby mode will be explained. The USB data is input from an external device connected to the USB interface 353 and stored in the FIFO unit 80 or the sub-memory 380 under the control of the processor 70.

The processor 70 analyzes the USB data to determine whether it is necessary to convert the standby mode into the active mode. If it is determined that it is necessary to convert the standby mode into the active mode, the processor 70 controls the main power supply unit 320 to supply power to the image forming apparatus 300. If the standby mode is converted into the active mode, the USB host module 50 reads out the USB data from the FIFO unit 80 or the sub-memory 380 and relays the USB data to the main USB device module 332. The data transmission path from the main USB device module 332 to the USB interface 353 is the reverse of the above-described process.

The case in which the data received through the wakeup receiver 354 (hereinafter, referred to as "wakeup data") is relayed in the standby mode will be explained. Since the wakeup data refers to a direct signal to request conversion from the standby mode into the active mode, the processor 70 stores the wakeup data to the FIFO unit 80 or the sub-memory 380 and controls the main power supply unit 320 to supply power to the image forming apparatus 300. To this end, the image forming apparatus 300 is converted from the standby mode into the active mode. In the active mode, the processor 70 reads out the wakeup data and relays the wakeup data to the main controller 330 through the first IO unit 61.

The case in which the data received through the fax transceiver 355 (hereinafter, referred to as "fax data") is relayed in the standby mode will be explained. An external facsimile machine communicably connected to the fax transceiver 355 transmits fax data to the fax transceiver 355. The fax data includes a ring signal and actual data which is to be scanned and printed. The fax transceiver 355 transmits the ring signal to the sub-controller 370 through the second IO unit 62, and, since the ring signal satisfies the wakeup condition, the processor 70 controls the main power supply unit 320 to supply power to the image forming apparatus 300.

If the mode is converted from the standby mode into the active mode, the fax transceiver 355 receives the actual data from the external facsimile machine and the processor 70 stores the actual data in the FIFO unit 80 or the sub-memory 380 and relays the data to the main controller 330 through the third IO unit 63. The main controller 330 controls a corresponding operation unit (for example, 311) to scan and print the relayed actual data.

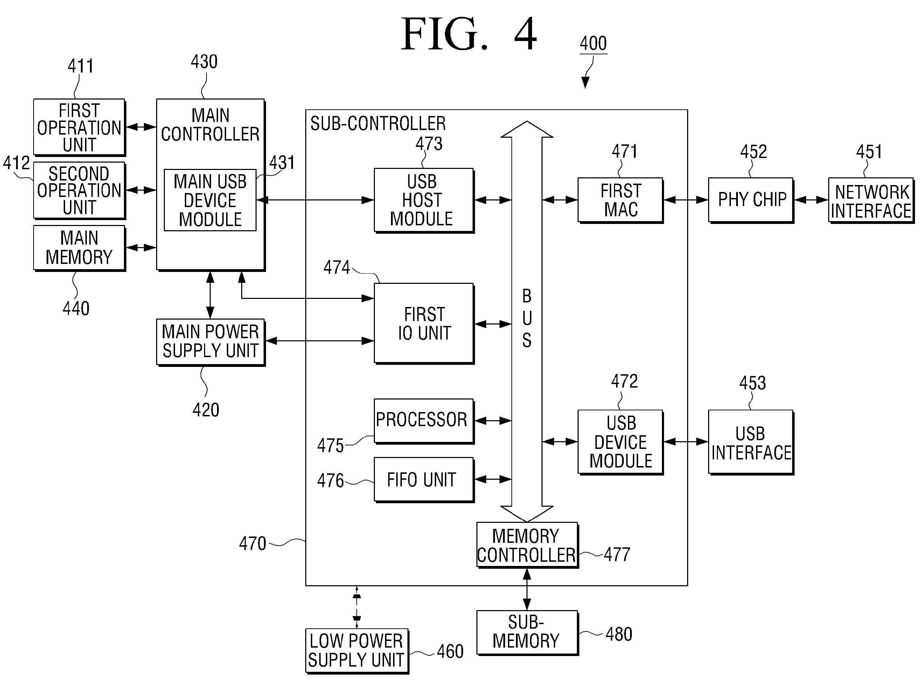

FIG. 4 is an image forming apparatus according to another exemplary embodiment.

Referring to FIG. 4, an image forming apparatus 400 includes a first operation unit 411 and a second operation unit 412, a main power supply unit 420, a main controller 430, a main memory 440, a network interface 451, a PHY chip 452, a USB interface 453, a low power supply unit 460, a sub-controller 470, and a sub-memory 480. Since the respective components of the image forming apparatus 400 are almost the same as those of the image forming apparatus 300 of FIG. 3, the detailed description thereof is omitted. Also, for the sake of simplicity, the wakeup receiver 354, the fax transceiver 355, and the second and the third IO units 62, 63 are not illustrated.

However, in FIG. 4, the main controller 430 does not include a main MAC 331 and the sub-controller 470 does not include a second MAC 20 and a switch 30. Therefore, the network data received through the network interface 451 is relayed to a main USB device module 431 of the main controller 430 via a first MAC 471, a memory controller 477, the sub-memory 480, and a USB host module 473. The relaying process is controlled by the sub-controller 470 or a processor 475.

More specifically, in the standby mode, the network data is temporarily stored to the sub-memory 480 via the network interface 451, the PHY chip 452, the first MAC 471 and the memory controller 477 or temporarily stored to a FIFO unit 476 via the network interface 451, the PHY chip 452 and the first MAC 471. If the network data should be processed under the control of the main controller 430, the processor 475 converts the mode of the image forming apparatus 400 into the active mode. If the mode is converted from the standby mode into the active mode, the USB host module 473 reads out the network data from the FIFO unit 476 or the sub memory 480 and relays the network data to the main USB device module 431.

The USB data received through the USB interface 453 is relayed in the same manner as that described with reference to FIG. 3. For example, data provided from an external source through the USB interface 453 is output to a USB device module 472

In addition, a first IO unit 474 is connected to the main power supply unit 420 to receive power and is also connected to the main controller 430 to receive various signals or data.

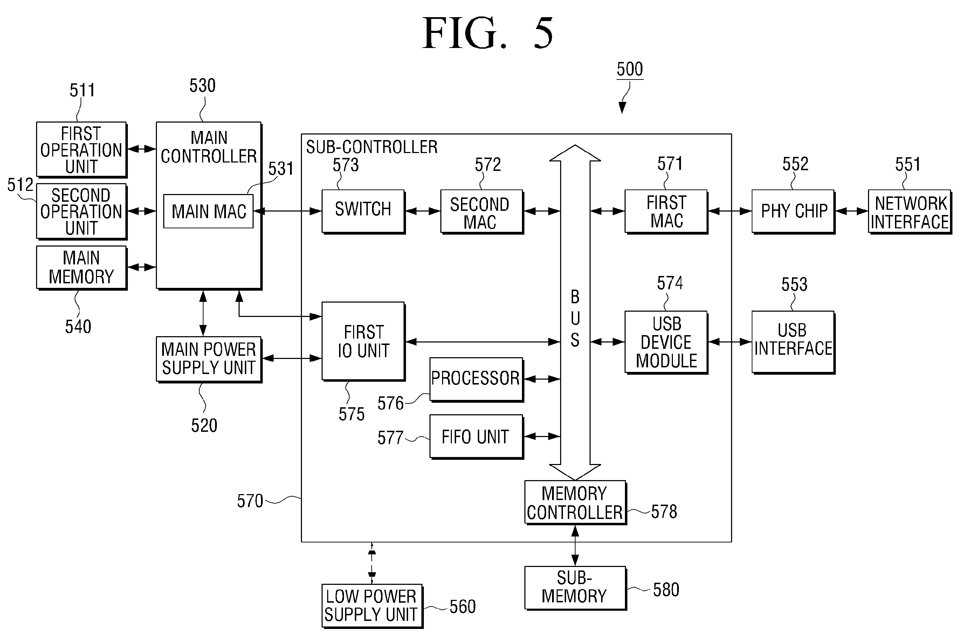

FIG. 5 is a block diagram illustrating an image forming apparatus according to another exemplary embodiment.

Referring to FIG. 5, an image forming apparatus 500 includes a first operation unit 511 and a second operation unit 512, a main power supply unit 520, a main controller 530, a main memory 540, a network interface 551, a PHY chip 552, a USB interface 553, a low power supply unit 560, a sub-controller 570, and a sub-memory 580. Since the respective components of the image forming apparatus 500 are almost the same as those of the image forming apparatus 300 of FIG. 3, the detailed description thereof is omitted. Also, for the sake of simplicity, the wakeup receiver 354, the fax transceiver 355, and the second and the third IO units 62, 63 are not illustrated.

However, in FIG. 5, the main controller 530 does not include a main USB device module 332 and the sub-controller 570 does not include a USB host module 50. Accordingly, the USB data received through the USB interface 553 is relayed to a main MAC 531 via a USB device module 574, a memory controller 578, the sub-memory 580, a second MAC 572, and a switch 573. The relaying process is controlled by the sub-controller 570 or a processor 576.

More specifically, in the standby mode, the USB data is temporarily stored to a FIFO unit 577 or temporarily stored to the sub-memory 580 via the USB device module 574 and the memory controller 578. If the USB data should be processed under the control of the main controller 530, the processor 576 converts the mode of the image forming apparatus 500 from the standby mode into the active mode. If the mode is converted from the standby mode into the active mode, the second MAC 572 reads out the temporarily stored USB data and relays the USB data to the switch 573, and the switch 573 relays the USB data to a main MAC 531 at the main controller 530 according to a transmitting time.

The network data received through the network interface 551 is relayed in the same manner as that described with reference to FIG. 3. For example, the network data is relayed through the PHY chip 552 and a first MAC 571.

In addition, a first IO unit 575 is connected to the main power supply unit 520 to receive power and is also connected to the main controller 530 to receive various signals or data.

FIG. 6 is a block diagram illustrating an image forming apparatus to control low power according to another exemplary embodiment.

Referring to FIG. 6, an image forming apparatus 600 includes two PHY chips 390, 395 instead of the switch 30 of the sub-controller 370 of FIG. 3. The two PHY chips 390, 395 relay data of an MII, a GMII or an RGMII format from a second MAC 20 to a main MAC 331 while synchronizing the data. The two PHY chips 390, 395 may be also interposed between the main controller 530 and the sub-controller 570 in the case of FIG. 5. In this case, the switch 573 is not provided. Other reference numbers were explained with reference to FIG. 3, for example.

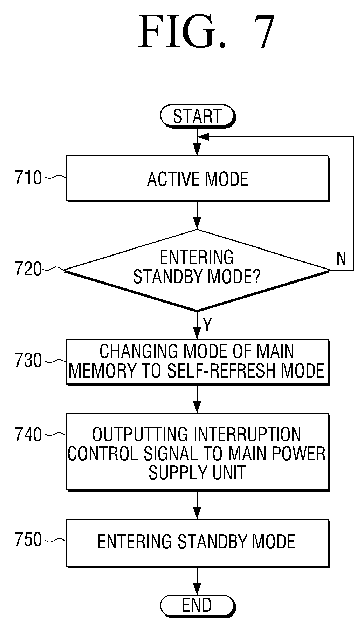

FIG. 7 is a flowchart illustrating a process of converting an active mode into a standby mode in a method of controlling low power of the image forming apparatus of FIG. 3.

Referring to FIG. 7, in the active mode in which the image forming apparatus 300 is normally operated (710), if it is determined that it is necessary to enter the standby mode (720), the main controller 330 changes the mode of the main memory 340 to a self-refresh mode and notifies the sub-controller 370 that the mode of the main memory 340 has been changed to the self-refresh mode (730).

According to the notification in 730, the sub-controller 370 determines that the main controller 330 is ready to enter the standby mode and outputs an interruption control signal to the main power supply unit 320 (740).

The main power supply unit 320 interrupts the power supplied to the main controller 330 and the plurality of operation units 311, 312 according to the interruption control signal such that the image forming enters the standby mode (750). Accordingly, power is supplied to the sub-controller 370 and the components 351∼355, 380 connected to the sub-controller 370 so that the image forming apparatus 300 can consume minimum power in the standby mode.

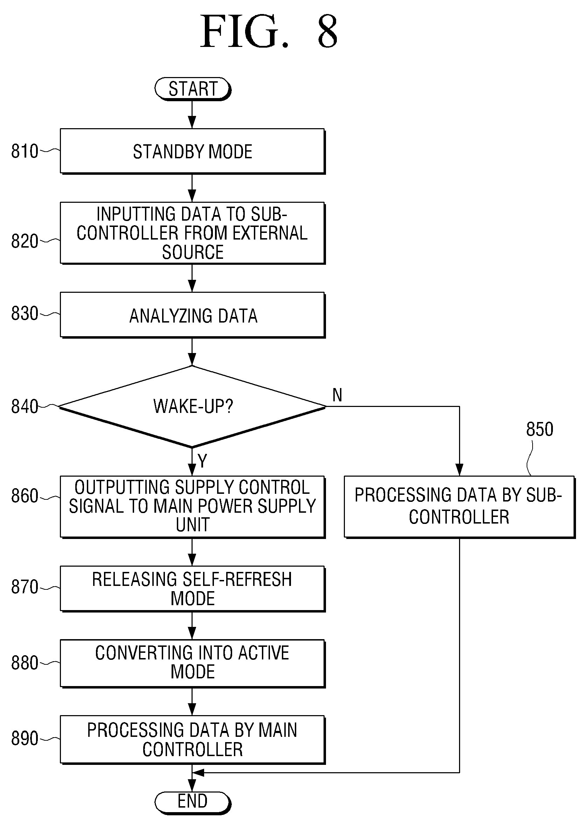

FIG. 8 is a flowchart illustrating a process of converting a standby mode into an active mode in the method of controlling low power of the image forming apparatus of FIG. 3.

Referring to FIG. 8, the image forming apparatus 300 is in the standby mode to save power (810). If data is input from an external source (820), the sub-controller 370 analyzes the data to determine whether to convert the standby mode into an active mode (830). The data input in operation 820 may be input through the network interface 351, the USB interface 353, the wakeup receiver 354, or the fax transceiver 355.

In operation 830, the sub-controller 370 temporarily stores the input data to the FIFO unit 80 or the sub-memory 380 and determines whether the input data is a signal satisfying the wakeup condition (840). That is, the sub-controller 370 determines whether the input data can be processed by the sub-controller 370 or the main controller 330.

If the data can be processed by the sub-controller 370, the sub-controller 370 maintains the standby mode and processes the data using information stored in the sub-memory 380 (850). For example, if the input data inquires about the status of the image forming apparatus 300, the processor 70 searches for the corresponding status information from the sub-memory 380 and responds to the inquiry.

On the other hand, if the wakeup condition is satisfied in operation 840, the sub-controller 370 outputs a supply control signal to the main power supply unit 320 (860).

The main power supply unit 320 releases the self-refresh mode of the main memory 340 according to the supply control signal (870), and supplies power to the main controller 330 and the components 311, 312, 340 connected to the main controller 330 to convert the mode from the standby mode into the active mode (880).

If the mode is converted from the standby mode into the active mode, the sub-controller 370 relays the data temporary stored to the FIFO unit 80 or the sub-memory 380 to the main controller 330 and the main controller 330 controls a corresponding operation unit to process the relayed data (890).

Since the relaying process in operation 890 was described with reference to FIG. 3, the relaying of the network data, the relaying of the USB data, the relaying of the data input from the wakeup receiver 354, and the relaying of the fax data are not described.

The process of FIG. 8 can be applied to the image forming apparatuses 400, 500, 600 shown in FIGS. 4 to 6.

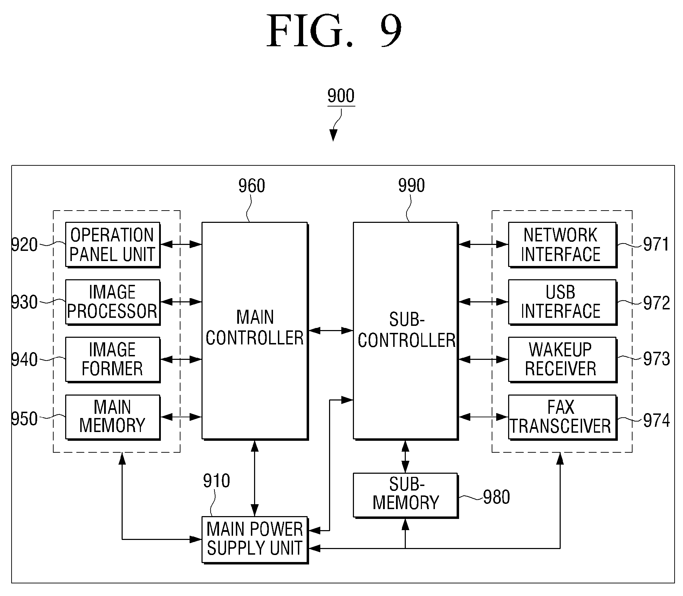

FIG. 9 is a block diagram illustrating an image forming apparatus to control low power according to another exemplary embodiment.

Referring to FIG. 9, an image forming apparatus 900 includes a main power supply unit 910, an operation panel unit 920, an image processor 930, an image former 940, a main memory 950, a main controller 960, a network interface 971, a USB interface 972, a wakeup receiver 973, a fax transceiver 974, a sub-memory 980, and a sub-controller 990.

Since the operations of the main power supply unit 910, the main memory 950, the main controller 960, the network interface 971, the USB interface 972, the wakeup receiver 973, the fax transceiver 974, the sub-memory 980, and the sub-controller 990 are almost the same as those of the components described with reference to FIGS. 3 to 6, detailed description thereof is omitted.

The operation panel unit 920 includes, as a user interface, a plurality of function keys and a touch screen, for example, to receive a user command from a user, and also includes a display panel to display the status of the image forming apparatus 900. However, the operation panel unit 920 is not limited thereto and may include any of a plurality of input options.

The image processor 930 processes printing data, scanning data, or fax data in the formats suitable for their respective functions. For example, the image processor 930 converts the printing data into bitmap data using a corresponding emulator. The printing data is input to a personal computer connected via the USB interface 972 and the fax data may be input via the fax transceiver 974.

The image former 940 forms an image based on the data processed by the image processor 930. For example, if the image former 940 includes a scanner (not shown) or a printing engine unit (not shown), the image former 940 scans, prints, and copies the data.

The main memory 950 stores various programs necessary to realize the functions of the image forming apparatus 900, various data generated during the operation of the image forming apparatus 900, and status information of the image forming apparatus 900, and may be a ROM or a RAM.

The main controller 960 controls the overall operation of the image forming apparatus 900 according to a stored control program. For example, if a ring signal is received through the fax transceiver 974 and the mode is converted from the standby mode into the active mode under the control of the sub-controller 990, the main controller 960 controls the image former 940 to scan and print the fax data relayed through the fax transceiver 974 and the sub-controller 990.

According to exemplary embodiments described above, in the standby mode, the power supplied to the main controller 130, 330, 430, 530, 960 is completely interrupted and the power supplied to the sub-controller 140, 370, 470, 570, 990 is maintained so that power consumption can be minimized. Also, by allowing data input from an external source to communicate with the sub-controller 140, 370, 470, 570, 990, the data input in the standby mode can be effectively processed. That is, if the input data can be processed by the sub-controller 140, 370, 470, 570, 990, the sub-controller 140, 370, 470, 570, 990 processes the data by itself while maintaining the standby mode, and if the data can be processed by the main controller 130, 330, 430, 530, 960, the mode is converted from the standby mode into the active mode. Therefore, the mode is selectively converted from the standby mode into the active mode so that the power consumption can be minimized.

Although a few preferred embodiments have been shown and described, it will be appreciated by those skilled in the art that various changes and modifications might be made without departing from the scope of the invention, as defined in the appended claims.

## Claims

1. An image forming apparatus, comprising:
an operation unit (311) to perform a printing operation;
a main memory (340) to store a program for driving the operation unit (311);
a main controller (330) coupled to the main memory (340) to control the operation unit (311) by executing the program accessed from the main memory (340) ;
a main power supply unit (320) to supply power to the main controller (330) the main memory (340);
a communication interface (351) to receive data from an external source; and
**characterised in that**:
a sub-controller (370) is coupled between the communication interface (351) and the main controller (330), the sub-controller comprising a memory controller (90);
and **in that** the image forming apparatus comprises a sub-memory (380) operable to store a program to drive the sub-controller (370), a wakeup condition for waking up the main controller (330) from a power-off state, and data received from the communication interface during the power-off state of the main controller (330);wherein, when the operation unit (311) is in an idle state for a predetermined time, the main controller (330) is operable to be transitioned to the power-off state,
wherein the main memory (340) is operable to be operated in a self-refresh mode during the power-off state of the main controller (330), and
wherein, during the power-off state of the main controller (330), the sub-controller (370) is operable to:
receive data via the communication interface (351),
determine whether the received data is to be processed by the sub-controller (370) or by the main controller (330) by using the received data and the wakeup condition stored in the sub-memory (380), and
wake up the main controller (330) if it is determined that the received data is to be processed by the main controller (330),
wherein the memory controller (90), when the image forming apparatus is powered on, is operable to receive the wakeup condition from an external memory and is operable to store the wakeup condition in the sub-memory (380),
wherein the wakeup condition comprises a cover open detection signal related to the image forming apparatus or a tray open detection signal related to a tray of the image forming apparatus.

2. The image forming apparatus as claimed in claim 1,,
wherein the sub-controller (370) comprises :
a first media access controller (MAC) (10) operable to receive data input through the communication interface (351);
a second MAC (20) operable to output data which is received by the first MAC (10); and
a switch (30) operable to control a transmitting time of the output data.

3. The image forming apparatus as claimed in claim 2, wherein, the output data is in at least one format of media independent interface (MII), gigabit MII (GMI), and reduced GMII (RGMII), the switch (30) is arranged to control the transmitting time of the data so as to transmit the data in at least one format of the MII, the GMII, and the RGMII.

4. The image forming apparatus as claimed in claim 2 or 3, wherein the sub-controller (370) further comprises:
a processor (70) operable to analyze data received through the first MAC (10) and operable to control the main power supply unit (320) to supply the power to the main controller (330) when the data that is received by the first MAC (10) in the power-off state of the main controller (330) is data to be processed by the main controller (330); and
wherein the second MAC (20) is operable to transmit the received data to the switch (30) when the main controller (330) is converted into a power-on state.

5. The image forming apparatus as claimed in any preceding claim, wherein the sub-controller further comprises:
a USB device module (40) operable to receive data through a universal serial bus (USB) interface (353) of the communication interface (351); and
a USB host module (50) operable to relay the data received by the USB device module (40) to the main controller (330).

6. The image forming apparatus according to claim 5, wherein power supplied to the main controller (330) is operable to be converted into a power-on state when the data received through the USB device module (40) in the power-off state of the main controller (330) is data that is to be processed by the main controller (330), and
wherein the USB host module (50) is operable to transmit the data received through the USB device module (40) to the main controller (330) when the main controller (330) is converted into the power-on state.

7. The image forming apparatus as claimed in claim 1, wherein the sub-controller (370) comprises:
a first MAC (10) operable to receive data through the communication interface (351);
a processor (70) operable to control the main power supply unit (320) to resupply the power to the main controller (330) when the data that is received by the first MAC (10) in the power-off state of the main controller (330) is data to be processed by the main controller (330); and
a USB host module (50) operable to relay the data received through the first MAC (10) to the main controller (330), when the main controller (330) is converted into the power-on state by the re-supplied power.

8. The image forming apparatus as claimed in claim 7, wherein the sub-controller (370) further comprises a USB device module (40) operable to receive data through a universal serial bus (USB) interface (353),
wherein the processor (70) is operable to analyze the data received by the USB device module (40) and to determine whether to convert the power-off state of the main controller (330) into the power-on state, and, if the main controller (330) is converted into the power-on state, the USB host module (50) is operable to relay the data received through the USB device module (40) to the main controller (330).

9. The image forming apparatus as claimed in claim 1, wherein the sub-controller (370) comprises:
a USB device module (40) operable to receive data through a universal serial bus (USB) interface (353) of the communication interface (351);
wherein the main controller (330) is operable to be converted into the power-on state when the received data is data to be processed by the main controller (330); and
the second MAC (20) is operable to relay the data received through the USB device module (40) to the main controller (330) when the main controller (330) is converted into the power-on state.

10. The image forming apparatus as claimed in claim 9, wherein the sub-controller (370) further comprises a first MAC (10) operable to receive data through the communication interface (351),
wherein the main controller (330) is operable to be converted into the power-on state if the received data is data that is to be processed by the main controller (330), and
wherein the second MAC (20) is operable to relay the data received through the first MAC (10) to the main controller (330) when the main controller (330) is converted into the power-on state.

11. A method for controlling power consumed by an image forming apparatus (300) which comprises a communication interface (351), a main controller (330), a main memory (340), a sub-memory (380) to store a wakeup condition for waking up the main controller (330) from a power-off state a main power supply unit (320), , a sub-controller (370) coupled between the main controller (330) and the communication interface (351), the sub-controller (370) comprising a memory controller (90), the method comprising:
controlling, by the main controller (330), an operation of a printing unit (311) of the image forming apparatus by executing a program accessed from the main memory (340);
**characterised by:**
when the printing unit (311) of the image forming apparatus (300) is in an idle state for a predetermined time, transitioning the main controller (330) to a power-off state;
operating the main memory (340) in a self-refresh mode when in the power-off state of the main controller (330); and
when data is received through the communication interface (311) in the power-off state of the main controller (330), determining, by the sub-controller (370), whether the received data is to be processed by the sub-controller (370) or the main controller (330) by using the received data and the wakeup condition stored in the sub-memory (380); and
converting the main controller (330) into a power-on state if it is determined that the received data is to be processed by the main controller (330),
wherein the memory controller (90), when the image forming apparatus is powered on, receives the wakeup condition from an external memory and stores the wakeup condition in the sub-memory (380),
wherein the wakeup condition comprises a cover open detection signal related to the image forming apparatus or a tray open detection signal related to a tray of the image forming apparatus.

12. The method of claim 11, further comprising, relaying the data received via the communication interface (311) through the sub-controller (370) to the main controller (330).

13. The method of claim 11 or 12, wherein, during the power-off state of the main controller (330), if it is determined that the received data is processable by the sub-controller (370), the method further comprises processing the received data by the sub-controller (370) without waking up the main controller (330).

14. The method of any of claims 11 to 13, wherein the determining step comprises:
receiving data input from the communication interface (351), by a first MAC (10) and/or by a USB device module (40);
if it is necessary to convert the main controller (330) into the power-on state as a result of analyzing the data received through the first MAC (10) or the USB device module (40), supplying power to the main controller (330) and thereby converting the power-off state of the main controller (330) into the power-on state; and
relaying the data received through the first MAC (10) or the USB device module (40) to the main controller (330) through a second MAC (20) and/or through a USB host module (50).

15. The method of any of claims 11 to 14, wherein the determining step comprises connecting to a fax transceiver (355) to transceive data with an external facsimile machine or a wakeup button (354) to request conversion into the active mode, and analyzing data input from the fax transceiver (355) or the wakeup button (354) to determine whether to convert into the active mode.

## Patentansprüche

1. Bilderzeugungsvorrichtung, umfassend:
eine Betriebseinheit (311) zur Durchführung eines Druckvorgangs;
einen Hauptspeicher (340) zum Speichern eines Programms zum Antreiben der Betriebseinheit (311);
einen mit dem Hauptspeicher (340) gekoppelten Hauptcontroller (330) zum Steuern der Betriebseinheit (311) durch Ausführen des aus dem Hauptspeicher (340) abgegriffenen Programms;
eine Hauptstromversorgungseinheit (320) zum Liefern von Strom an den Hauptcontroller (330) den Hauptspeicher (340);
eine Kommunikationsschnittstelle (351) zum Empfangen von Daten aus einer externen Quelle; und
**dadurch gekennzeichnet, dass**
ein Subcontroller (370) zwischen der Kommunikationsschnittstelle (351) und dem Hauptcontroller (330) zwischengeschaltet ist, wobei der Subcontroller einen Speichercontroller (90) umfasst;
und dadurch, dass die Bilderzeugungsvorrichtung einen Subspeicher (380) umfasst, der so betreibbar ist, dass er ein Programm zum Antreiben des Subcontrollers (370), eine Aufweckbedingung zum Aufwecken des Hauptcontrollers (330) aus einem Ausschaltzustand und Daten, die während des Ausschaltzustands des Hauptcontrollers (330) empfangen werden, speichert; wobei, wenn sich die Betriebseinheit (311) über eine vorherbestimmte Zeit in einem Leerlaufzustand befindet, der Hauptcontroller (330) so betreibbar ist, dass er in den Ausschaltzustand überführt wird,
wobei der Hauptspeicher (340) so betreibbar ist, dass er während des Ausschaltzustands des Hauptcontrollers (330) in einem Selbstauffrischungsmodus betrieben wird, und
wobei der Subcontroller (370) während des Ausschaltzustands des Hauptcontrollers (330) so betreibbar ist,
dass er Daten über die Kommunikationsschnittstelle (351) empfängt,
dass er bestimmt, ob die empfangenen Daten durch den Subcontroller (370) oder durch den Hauptcontroller (330) unter Verwendung der empfangenen Daten und der im Subspeicher (380) gespeicherten Aufweckbedingung zu verarbeiten sind, und
dass er den Hauptcontroller (330) aufweckt, falls festgestellt wird, dass die empfangenen Daten durch den Hauptcontroller (330) zu verarbeiten sind,
wobei, wenn die Bilderzeugungsvorrichtung eingeschaltet ist, der Speichercontroller (90) so betreibbar ist, dass er die Aufweckbedingung aus einem externen Speicher empfängt, und so betreibbar ist, dass er die Aufweckbedingung im Subspeicher (380) speichert,
wobei die Aufweckbedingung ein auf die Bilderzeugungsvorrichtung bezogenes Erfassungssignal 'Abdeckung offen' oder ein auf ein Fach der Bilderzeugungsvorrichtung bezogenes Erkennungssignal 'Fach offen' umfasst.

2. Bilderzeugungsvorrichtung nach Anspruch 1,
wobei der Subcontroller (370) umfasst:
einen ersten Medienzugriffscontroller (MAC) (10), der so betreibbar ist, dass er Daten empfängt, die über die Kommunikationsschnittstelle (351) eingehen;
einen zweiten MAC (20), der so betreibbar ist, dass er Daten ausgibt, die vom ersten MAC (10) empfangen werden; und
einen Switch (30), der so betreibbar ist, dass er eine Übertragungszeit der Ausgabedaten steuert.

3. Bilderzeugungsvorrichtung nach Anspruch 2, wobei, die Ausgabedaten in wenigstens einem der Formate medienunabhängige Schnittstelle (MII), Gigabit-MII (GMI) und reduzierte GMII (RGMII) vorliegen, der Switch (30) so angeordnet ist, dass er die Übertragungszeit der Daten so steuert, dass er die Daten in wenigstens einem der Formate MII, GMII und RGMII überträgt.

4. Bilderzeugungsvorrichtung nach Anspruch 2 oder 3, wobei der Subcontroller (370) ferner umfasst:
einen Prozessor (70), der so betreibbar ist, dass er über den ersten MAC (10) empfangene Daten analysiert, und so betreibbar, dass er die Hauptstromversorgungseinheit (320) so ansteuert, dass sie Strom an den Hauptcontroller (330) liefert, wenn die Daten, die durch den ersten MAC (10) im Ausschaltzustand des Hauptcontrollers (330) empfangen werden, vom Hauptcontroller (330) zu verarbeitende Daten sind; und
wobei der zweite MAC (20) so betreibbar ist, dass er die empfangenen Daten an den Switch (30) überträgt, wenn der Hauptcontroller (330) in einen Einschaltzustand überführt wird.

5. Bilderzeugungsvorrichtung nach einem der vorhergehenden Ansprüche, wobei der Subcontroller ferner umfasst:
ein USB-Gerätemodul (40), das so betreibbar ist, dass es über eine universelle serielle Bus(USB)-Schnittstelle (353) der Kommunikationsschnittstelle (351) Daten empfängt; und
ein USB-Hostmodul (50), das so betreibbar ist, dass es die vom USB-Gerätemodul (40) empfangenen Daten an den Hauptcontroller (330) weiterleitet.

6. Bilderzeugungsvorrichtung nach Anspruch 5, wobei ein an den Hauptcontroller (330) gelieferter Strom so betreibbar ist, dass er in einen Einschaltzustand überführt werden kann, wenn die Daten, die über das USB-Gerätemodul (40) im Ausschaltzustand des Hauptcontrollers (330) empfangen werden, vom Hauptcontroller (330) zu verarbeitende Daten sind, und
wobei das USB-Hostmodul (50) so betreibbar ist, dass es die über das USB-Gerätemodul (40) empfangenen Daten an den Hauptcontroller (330) überträgt, wenn der Hauptcontroller (330) in den Einschaltzustand überführt wird.

7. Bilderzeugungsvorrichtung nach Anspruch 1, wobei der Subcontroller (370) umfasst:
einen ersten MAC (10), der so betreibbar ist, dass er über die Kommunikationsschnittstelle (351) Daten empfängt;
einen Prozessor (70), der so betreibbar ist, dass er die Hauptstromversorgungseinheit (320) so ansteuert, dass sie wieder Strom an den Hauptcontroller (330) liefert, wenn die Daten, die durch den ersten MAC (10) im Ausschaltzustand des Hauptcontrollers (330) empfangen werden, vom Hauptcontroller (330) zu verarbeitende Daten sind; und
ein USB-Hostmodul (50), das so betreibbar ist, dass es die über den ersten MAC (10) empfangenen Daten an den Hauptcontroller (330) weiterleitet, wenn der Hauptcontroller (330) durch den wieder gelieferten Strom in den Einschaltzustand überführt wird.

8. Bilderzeugungsvorrichtung nach Anspruch 7, wobei der Subcontroller (370) ferner ein USB-Gerätemodul (40) umfasst, das so betreibbar ist, dass es über eine universelle serielle Bus(USB)-Schnittstelle (353) Daten empfängt,
wobei der Prozessor (70) so betreibbar ist, dass er die durch das USB-Gerätemodul (40) empfangenen Daten analysiert und bestimmt, ob der Ausschaltzustand des Hauptcontrollers (330) in den Einschaltzustand zu überführen ist, und, falls der Hauptcontroller (330) in den Einschaltzustand überführt wird, das USB-Hostmodul (50) so betreibbar ist, dass es die über das USB-Gerätemodul (40) empfangenen Daten an den Hauptcontroller (330) weiterleitet.

9. Bilderzeugungsvorrichtung nach Anspruch 1, wobei der Subcontroller (370) umfasst:
ein USB-Gerätemodul (40), das so betreibbar ist, dass es über eine universelle serielle Bus(USB)-Schnittstelle (353) der Kommunikationsschnittstelle (351) Daten empfängt;
wobei der Hauptcontroller (330) so betreibbar ist, dass er in den Einschaltzustand überführt wird, wenn die empfangenen Daten vom Hauptcontroller (330) zu verarbeitende Daten sind; und
der zweite MAC (20) so betreibbar ist, dass er die über das USB-Gerätemodul (40) empfangenen Daten an den Hauptcontroller (330) weiterleitet, wenn der Hauptcontroller (330) in den Einschaltzustand überführt wird.

10. Bilderzeugungsvorrichtung nach Anspruch 9, wobei der Subcontroller (370) ferner einen ersten MAC (10) umfasst, der so betreibbar ist, dass er über die Kommunikationsschnittstelle (351) Daten empfängt;
wobei der Hauptcontroller (330) so betreibbar ist, dass er in den Einschaltzustand überführt wird, falls die empfangenen Daten vom Hauptcontroller (330) zu verarbeitende Daten sind, und
wobei der zweite MAC (20) so betreibbar ist, dass er die über den ersten MAC (10) empfangenen Daten an den Hauptcontroller (330) weiterleitet, wenn der Hauptcontroller (330) in den Einschaltzustand überführt wird.

11. Verfahren zum Steuern des Stromverbrauchs einer Bilderzeugungsvorrichtung (300) umfassend eine Kommunikationsschnittstelle (351), einen Hauptcontroller (330), einen Hauptspeicher (340), einen Subspeicher (380) zum Speichern einer Aufweckbedingung zum Aufwecken des Hauptcontrollers (330) aus einem Ausschaltzustand eine Hauptstromversorgungseinheit (320)" einen zwischen dem Hauptcontroller (330) und der Kommunikationsschnittstelle (351) zwischengeschalteten Subcontroller (370), wobei der Subcontroller (370) einen Speichercontroller (90) umfasst, wobei das Verfahren umfasst:
Steuern eines Arbeitsvorgangs einer Druckeinheit (311) der Bilderzeugungsvorrichtung durch den Hauptcontroller (330) durch Ausführen eines aus dem Hauptspeicher (340) abgegriffenen Programms;
**gekennzeichnet durch:**
wenn die Druckeinheit (311) der Bilderzeugungsvorrichtung (300) sich über eine vorherbestimmte Zeit in einem Leerlaufzustand befindet:
Überführen des Hauptcontrollers (330) in einen Ausschaltzustand;
Betreiben des Hauptspeichers (340) in einem Selbstauffrischungsmodus, wenn im Ausschaltzustand des Hauptcontrollers (330); und
wenn im Ausschaltzustand des Hauptcontrollers (330) Daten über die Kommunikationsschnittstelle (311) empfangen werden: Bestimmen **durch** den Subcontroller (370), ob die empfangenen Daten **durch** den Subcontroller (370) oder den Hauptcontroller (330) unter Verwendung der empfangenen Daten und der im Subspeicher (380) gespeicherten Aufweckbedingung zu verarbeiten sind; und
Überführen des Hauptcontrollers (330) in einen Einschaltzustand, falls festgestellt wird, dass die empfangenen Daten **durch** den Hauptcontroller (330) zu verarbeiten sind,
wobei, wenn die Bilderzeugungsvorrichtung eingeschaltet ist, der Speichercontroller (90) die Aufweckbedingung aus einem externen Speicher empfängt und die Aufweckbedingung im Subspeicher (380) speichert,
wobei die Aufweckbedingung ein auf die Bilderzeugungsvorrichtung bezogenes Erfassungssignal 'Abdeckung offen' oder ein auf ein Fach der Bilderzeugungsvorrichtung bezogenes Erkennungssignal 'Fach offen' umfasst.

12. Verfahren nach Anspruch 11, ferner umfassend:
Weiterleiten der über die Kommunikationsschnittstelle (311) empfangenen Daten über den Subcontroller (370) an den Hauptcontroller (330).

13. Verfahren nach Anspruch 11 oder 12, wobei das Verfahren, falls während des Ausschaltzustands des Hauptcontrollers (330) festgestellt wird, dass die empfangenen Daten durch den Subcontroller (370) verarbeitbar sind, ferner umfasst: Verarbeiten der empfangenen Daten durch den Subcontroller (370) ohne Aufwecken des Hauptcontrollers (330).

14. Verfahren nach einem der Ansprüche 11 bis 13, wobei der Schritt des Bestimmens umfasst:
Empfangen von Daten, die von der Kommunikationsschnittstelle (351) aus eingehen, durch einen ersten MAC (10) und/oder durch ein USB-Gerätemodul (40);
falls es im Ergebnis der Analyse der über den ersten MAC (10) oder das USB-Gerätemodul (40) empfangenen Daten notwendig ist, den Hauptcontroller (330) in den Einschaltzustand zu überführen: Liefern von Strom an den Hauptcontroller (330) und dadurch Überführen des Ausschaltzustands des Hauptcontrollers (330) in den Einschaltzustand; und
Weiterleiten der über den ersten MAC (10) oder das USB-Gerätemodul (40) empfangenen Daten über einen zweiten MAC (20) und/oder über ein USB-Hostmodul (50) an den Hauptcontroller (330).

15. Verfahren nach einem der Ansprüche 11 bis 14, wobei der Schritt des Bestimmens umfasst: Verbinden mit einem Fax-Transceiver (355) zum Senden/Empfangen von Daten von/zu einem externen Faxgerät oder mit einem Aufweckschalter (354) zum Anfordern einer Umschaltung in den Aktivmodus, und Analysieren von Daten, die vom Fax-Transceiver (355) oder vom Aufweckschalter (354) aus eingehen, zum Bestimmen, ob in den Aktivmodus zu schalten ist.

## Revendications

1. Appareil de formation d'image, comprenant :
une unité d'opération (311) permettant de réaliser une opération d'impression ;
une mémoire principale (340) permettant de stocker un programme servant à commander l'unité d'opération (311) ;
un contrôleur principal (330) couplé à la mémoire principale (340), permettant de contrôler l'unité d'opération (311) en exécutant le programme accessible depuis la mémoire principale (340) ;
une unité d'alimentation principale (320) permettant d'alimenter le contrôleur principal (330) la mémoire principale (340) ;
une interface de communication (351) permettant de recevoir des données d'une source externe ; et
**caractérisé en ce que** :
un sous-contrôleur (370) est couplé entre l'interface de communication (351) et le contrôleur principal (330), le sous-contrôleur comprenant un contrôleur de mémoire (90) ;
et **en ce que** l'appareil de formation d'image comprend une sous-mémoire (380) permettant de stocker un programme servant à commander le sous-contrôleur (370), une condition de réveil servant à réveiller le contrôleur principal (330) d'un état de mise hors tension, et des données reçues de l'interface de communication pendant l'état de mise hors tension du contrôleur principal (330) ; le contrôleur principal (330), quand l'unité d'opération (311) est dans un état de repos pendant une durée prédéterminée, pouvant être transféré dans l'état de mise hors tension,
la mémoire principale (340) pouvant fonctionner dans un mode d'actualisation automatique pendant l'état de mise hors tension du contrôleur principal (330), et
pendant l'état de mise hors tension du contrôleur principal (330), le sous-contrôleur (370) permettant de :
recevoir des données par l'intermédiaire de l'interface de communication (351),
déterminer si les données reçues doivent être traitées par le sous-contrôleur (370) ou par le contrôleur principal (330) au moyen des données reçues et de la condition de réveil stockées dans la sous-mémoire (380), et
réveiller le contrôleur principal (330) s'il est déterminé que les données reçues doivent être traitées par le contrôleur principal (330),
le contrôleur de mémoire (90), quand l'appareil de formation d'image est mis sous tension, permettant de recevoir la condition de réveil en provenance d'une mémoire externe, et permettant de stocker la condition de réveil dans la sous-mémoire (380),
la condition de réveil comprenant un signal de détection de capot ouvert relatif à l'appareil de formation d'image, ou un signal de détection de bac ouvert relatif à un bac de l'appareil de formation d'image.

2. Appareil de formation d'image selon la revendication 1, dans lequel le sous-contrôleur (370) comprend :
un premier contrôleur d'accès au support (MAC) (10) permettant de recevoir des données d'entrée par l'intermédiaire de l'interface de communication (351) ;
un second MAC (20) permettant de délivrer les données reçues par le premier MAC (10) ; et
un commutateur (30) permettant de contrôler un temps de transmission des données délivrées.

3. Appareil de formation d'image selon la revendication 2, dans lequel les données délivrées sont au format interface indépendante du support (MII), MII gigabit (GMI) et/ou GMII réduite (RGMII), le commutateur (30) étant conçu pour contrôler le temps de transmission de manière à transmettre les données au format MII, GMII et/ou RGMII.

4. Appareil de formation d'image selon la revendication 2 ou 3, dans lequel le sous-contrôleur (370) comprend en outre :
un processeur (70) permettant d'analyser les données reçues par l'intermédiaire du premier MAC (10) et permettant de contrôler l'unité d'alimentation principale (320) afin d'alimenter le contrôleur principal (330) quand les données qui sont reçues par le premier MAC (10) dans l'état de mise hors tension du contrôleur principal (330) sont les données qui doivent être traitées par le contrôleur principal (330) ; et
le second MAC (20) permettant de transmettre les données reçues au commutateur (30) quand le contrôleur principal (330) est transféré dans l'état de mise sous tension.

5. Appareil de formation d'image selon l'une quelconque des revendications précédentes, dans lequel le sous-contrôleur comprend en outre :
un module de dispositif USB (40) permettant de recevoir des données par l'intermédiaire d'une interface de bus série universel (USB) (353) de l'interface de communication (351) ; et
un module hôte USB (50) permettant de relayer les données reçues par le module de dispositif USB (40) vers le contrôleur principal (330).

6. Appareil de formation d'image selon la revendication 5, dans lequel la tension fournie au contrôleur principal (330) peut être convertie en état de mise sous tension quand les données reçues par l'intermédiaire du module de dispositif USB (40) dans l'état de mise hors tension du contrôleur principal (330) sont des données qui doivent être traitées par le contrôleur principal (330), et
le module hôte USB (50) permettant de transmettre les données reçues par l'intermédiaire du module de dispositif USB (40) au contrôleur principal (330) quand le contrôleur principal (330) est transféré dans l'état de mise sous tension.

7. Appareil de formation d'image selon la revendication 1, dans lequel le sous-contrôleur (370) comprend :
un premier MAC (10) permettant de recevoir des données par l'intermédiaire de l'interface de communication (351) ;
un processeur (70) permettant de contrôler l'unité d'alimentation principale (320) afin de réalimenter le contrôleur principal (330) quand les données qui sont reçues par le premier MAC (10) dans l'état de mise hors tension du contrôleur principal (330) sont les données qui doivent être traitées par le contrôleur principal (330) ; et
un module hôte USB (50) permettant de relayer les données reçues par l'intermédiaire du premier MAC (10) au contrôleur principal (330) quand le contrôleur principal (330) est transféré dans l'état de mise sous tension par la réalimentation.

8. Appareil de formation d'image selon la revendication 7, dans lequel le sous-contrôleur (370) comprend en outre un module de dispositif USB (40) permettant de recevoir des données par l'intermédiaire d'une interface de bus série universel (USB) (353),
le processeur (70) permettant d'analyser les données reçues par le module de dispositif USB (40) et de déterminer s'il faut transférer le contrôleur principal (330) de l'état de mise hors tension à l'état de mise sous tension, et, si le contrôleur principal (330) est transféré dans l'état de mise sous tension, le module hôte USB (50) permettant de relayer les données reçues par l'intermédiaire du module de dispositif USB (40) au contrôleur principal (330).

9. Appareil de formation d'image selon la revendication 1, dans lequel le sous-contrôleur (370) comprend :
un module de dispositif USB (40) permettant de recevoir des données par l'intermédiaire d'une interface de bus série universel (USB) (353) de l'interface de communication (351) ;
le contrôleur principal (330) pouvant être transféré dans l'état de mise sous tension quand les données reçues sont des données qui doivent être traitées par le contrôleur principal (330) ; et
le second MAC (20) permettant de relayer les données reçues par l'intermédiaire du module de dispositif USB (40) au contrôleur principal (330) quand le contrôleur principal (330) est transféré dans l'état de mise sous tension.

10. Appareil de formation d'image selon la revendication 9, dans lequel le sous-contrôleur (370) comprend en outre un premier MAC (10) permettant de recevoir des données par l'intermédiaire de l'interface de communication (351),
le contrôleur principal (330) pouvant être transféré dans l'état de mise sous tension si les données reçues sont des données qui doivent être traitées par le contrôleur principal (330), et
le second MAC (20) permettant de relayer les données reçues par l'intermédiaire du premier MAC (10) au contrôleur principal (330) quand le contrôleur principal (330) est transféré dans l'état de mise sous tension.

11. Procédé de contrôle du courant consommé par un appareil de formation d'image (300) comprenant une interface de communication (351), un contrôleur principal (330), une mémoire principale (340), une sous-mémoire (380) permettant de stocker une condition de réveil afin de réveiller le contrôleur principal (330) d'un état de mise hors tension une unité d'alimentation principale (320), un sous-contrôleur (370) couplé entre le contrôleur principal (330) et l'interface de communication (351), le sous-contrôleur (370) comprenant un contrôleur de mémoire (90), le procédé consistant à :
contrôler, par le contrôleur principal (330), un fonctionnement d'une unité d'impression (311) de l'appareil de formation d'image en exécutant un programme accessible depuis la mémoire principale (340) ;
**caractérisé par** les étapes consistant à :
quand l'unité d'impression (311) de l'appareil de formation d'image (300) est dans un état de repos pendant une durée prédéterminée, transférer le contrôleur principal (330) dans un état de mise hors tension ;
faire fonctionner la mémoire principale (340) dans un mode d'actualisation automatique pendant l'état de mise hors tension du contrôleur principal (330) ; et
quand des données sont reçues par l'intermédiaire de l'interface de communication (311) dans l'état de mise hors tension du contrôleur principal (330), déterminer, par le sous-contrôleur (370), si les données reçues doivent être traitées par le sous-contrôleur (370) ou le contrôleur principal (330) au moyen des données reçues et de la condition de réveil stockées dans la sous-mémoire (380) ; et
transférer le contrôleur principal (330) dans un état de mise sous tension s'il est déterminé que les données reçues doivent être traitées par le contrôleur principal (330),
le contrôleur de mémoire (90), quand l'appareil de formation d'image est mis sous tension, recevant la condition de réveil en provenance d'une mémoire externe, et stockant la condition de réveil dans la sous-mémoire (380),
la condition de réveil comprenant un signal de détection de capot ouvert relatif à l'appareil de formation d'image, ou un signal de détection de bac ouvert relatif à un bac de l'appareil de formation d'image.

12. Procédé selon la revendication 11, consistant en outre à relayer les données reçues par l'intermédiaire de l'interface de communication (311) au moyen du sous-contrôleur (370) au contrôleur principal (330).

13. Procédé selon la revendication 11 ou 12, le procédé consistant en outre, s'il est déterminé pendant l'état de mise hors tension du contrôleur principal (330) que les données reçues peuvent être traitées par le sous-contrôleur (370), à traiter les données reçues par le sous-contrôleur (370) sans réveiller le contrôleur principal (330).

14. Procédé selon l'une quelconque des revendications 11 à 13, dans lequel l'étape de détermination consiste à :
recevoir des données d'entrée de l'interface de communication (351), par un premier MAC (10) et/ou par un module de dispositif USB (40) ;
s'il est nécessaire de transférer le contrôleur principal (330) dans l'état de mise sous tension en conséquence de l'analyse des données reçues par l'intermédiaire du premier MAC (10) ou du module de dispositif USB (40), alimenter le contrôleur principal (330) et transférer ainsi le contrôleur principal (330) de l'état de mise hors tension à l'état de mise sous tension ; et
relayer les données reçues par l'intermédiaire du premier MAC (10) ou du module de dispositif USB (40) au contrôleur principal (330) par l'intermédiaire d'un second MAC (20) et/ou par l'intermédiaire d'un module hôte USB (50).

15. Procédé selon l'une quelconque des revendications 11 à 14, dans lequel l'étape de détermination consiste à effectuer une connexion à un émetteur-récepteur de télécopie (355) afin d'émettre et de recevoir des données au moyen d'un télécopieur externe ou à un bouton de réveil (354) pour demander un transfert dans le mode actif, et analyser les données d'entrée provenant de l'émetteur-récepteur de télécopie (355) ou du bouton de réveil (354) afin de déterminer s'il faut effectuer le transfert dans le mode actif.
